Europäisches Patentamt

European Patent Office

Office européen des brevets

(11) Publication number: **0 175 469**
**B1**

# EUROPEAN PATENT SPECIFICATION

(45) Date of publication of patent specification: **24.05.89**  (51) Int. Cl.⁴: **F 16 L 37/20,** F 16 L 23/04

(21) Application number: **85305663.8**

(22) Date of filing: **09.08.85**

(54) Conduit connection system.

(30) Priority: **13.08.84 GB 8420515**

(43) Date of publication of application:
**26.03.86 Bulletin 86/13**

(45) Publication of the grant of the patent:
**24.05.89 Bulletin 89/21**

(84) Designated Contracting States:
**DE FR GB IT**

(56) References cited:
**EP-A-0 080 136**
**DE-A-3 229 066**

(73) Proprietor: **BRIDON plc**
**Warmsworth Hall**
**Doncaster South Yorkshire DN4 9JX (GB)**

(72) Inventor: **Belk, Alan**
**84 High Storrs**
**Sheffield South Yorkshire, S11 7LE (GB)**

(74) Representative: **Newby, Martin John et al**
**J.Y. & G.W. Johnson Furnival House 14-18 High Holborn**
**London WC1V 6DE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a connection system for securing the ends of conduits having mating end flanges and each provided with a fluid flow check valve movable between open and closed positions, the connection system being of the kind comprising flange clamping means including at least one movable element arranged to be positioned in an operative position in which the flange clamping means clamp the mating end flanges of the conduits together, power-operable moving means for moving said at least one movable element out of its operative position to enable disconnection of the mating end flanges and locking means for locking said at least one movable element in its operative position, the locking means being movable independently of said power-operable moving into or out of a release position in which movement of said at least one movable element is possible on application thereof of said predetermined force.

A known connection system is disclosed in GB—A—2039589. However, this known connection device is not provided with any means to lock the flange clamping means in position and to prevent the flange clamping means from being opened by the power-operable moving means at undesirable times.

A known connection system of the kind referred to is disclosed in EP—A—0080136. However this known connection system is only provided with a shear pin for locking the movable element(s) in the operative position. The sheer pin is only manually movable and its position is not linked to the condition of the check valves. Even when the check valves are open, the movable element(s) can be moved out of the operative position if a force of sufficient size to break the shear pin is applied.

According to the present invention, a connection system of the kind referred to is disclosed in the characterising portion of claim 1.

A connection system according to the invention ensures that the locking means occupies its release position only when at least one check valve is closed and occupies a locking position whenever the check valves are open so that the power-operable means cannot be operated to decouple the conduits when fluid is flowing through the conduits. When the check valves are closed the locking means is preferably automatically moved into its release position to enable safe decoupling of the conduits.

In its broadest aspect the invention is intended to cover many different types of connection systems for clamping mating conduit end flanges together and which employ a movable element which can be locked in an operative position by locking means. However, the invention is particularly applicable to band clamp connection devices of the type comprising a collar having at least two collar segments each provided with means for securing said mating end flanges together when urged radially inwards, pivot means for pivotally interconnecting said collar segments between opposite first and second end portions of the collar and first and second connection means, one of which constitutes the said movable element, mounted, respectively, adjacent, said first and second end portions of the collar and interengageable with each other for clamping said first and second end portions together so that said collar segments are urged radially inwards against the mating end flanges.

Preferably the locking means is movable into and out of its release position by actuating means, e.g. power actuating means such as an hydraulic cylinder. Typically the locking means comprises a release pin fixed relative to, so as to be moved by, a piston of a hydraulic cylinder which is mounted adjacent the movable element of the flange clamping means.

Conveniently the first and second connection means each have apertures therein which are aligned with each other when the connection means are interengaged, the said locking means, when in a locking position remote from its release position, being inserted through the aligned apertures. Typically the locking means is withdrawn completely from the aligned apertures when moved into its release position. Alternatively, however, the locking means may be in the form of a pin having at least one weakened region, the pin being designed to be sheared, at said at least one weakened region, by movement of the first connection means when the locking means is in its release position.

Suitably one of the first and second connection means is retained in a position of interengagement with the other connection means by a removable shear pin. The shear pin is designed to shear in use if the power-operable means is operated with the shear pin in its operative position and the locking means in its release position.

Embodiments of the invention will now be described, by way of example, with reference to the accompanying drawings, in which

Figure 1 is a side view of one embodiment of a conduit connection system according to the invention,

Figure 2 is a partly sectioned plan of the connection system shown in Figure 1, the sectional part being taken on the line II—II of Figure 1,

Figure 3 is a section taken on the line III—III of Figure 1,

Figure 4 is a partial end view of a second embodiment of a conduit connection system according to the invention,

Figure 5 is a sectional view, on an enlarged scale, of part of the conduit connection system shown in Figure 4,

Figure 6 is a side view of a third embodiment of a conduit connection system according to the invention,

Figure 7 is a sectional view taken on the line VII—VII of Figure 6,

Figures 8 and 9 are views from below and from one-side, respectively, of a fourth embodiment of a conduit connection system according to the invention,

Figure 10 is a view, on an enlarged scale, taken on the line X—X of Figure 8 but not showing the conduits or valves thereof,

Figure 11 is a sectional view, on an enlarged scale, of the release pin actuating assembly of the conduit connection system shown in Figures 8 and 9, and

Figure 12 is a view, on an enlarged scale, taken on the line XII—XII of Figure 11.

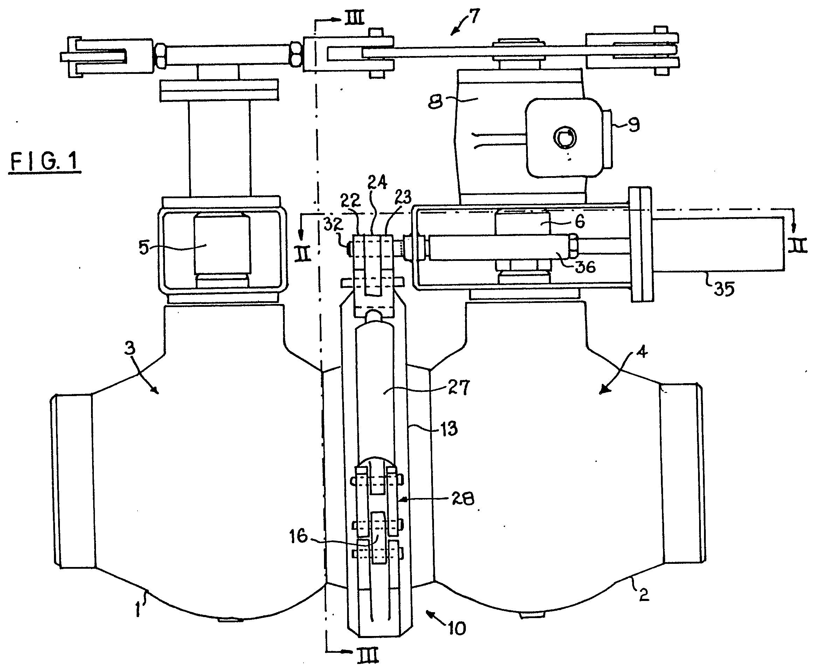

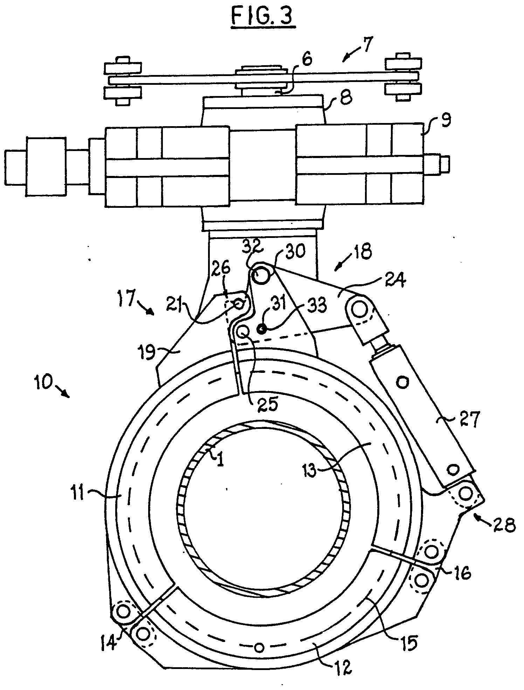

Figures 1 to 3 show a conduit connection system for connecting together two pipe sections 1 and 2 so that end flanges 15 (one of which can be seen in Figure 3) of the pipe sections 1 and 2 are held in leak-tight mating engagement. The pipe sections 1 and 2 include fluid flow check valves in the form of ball valves generally designated 3 and 4, respectively.

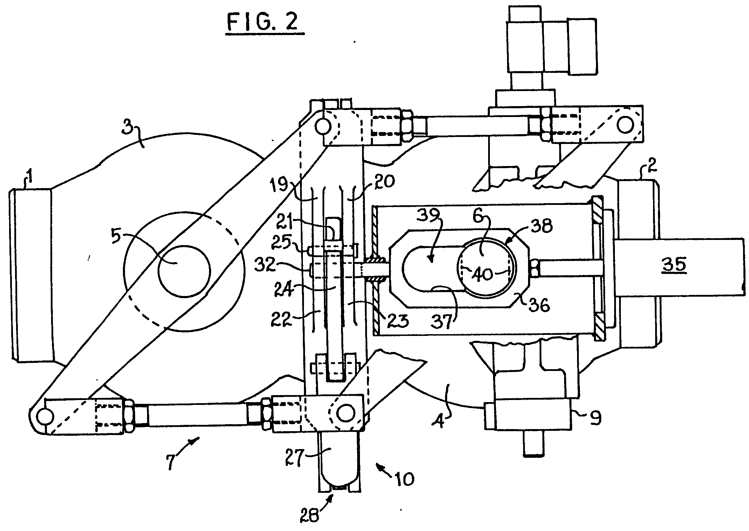

The ball valves 3 and 4 have valve elements (not shown) turnable by means of shafts 5 and 6, respectively. The shaft 6 is turned by means of a semi-rotary actuator 8 controlled by a double-acting hydraulic cylinder 9. A linkage, generally designated 7, connects the shafts 6 and 7 so that turning of the shaft 6 about its axis by the actuator 8 produces a similar turning movement of the shaft 5 about is own axis. In Figures 1 and 2 the ball valves 3 and 4 are shown in open positions for allowing flow of fluid through the pipe sections 1 and 2. Rotation of the shafts 5 and 6 through approximately 90° in counter-clockwise directions (as viewed in Figure 2) moves the valve elements into closed positions.

The end flanges 15 of the pipe sections 1 and 2 are held in mating engagement by means of a bandclamp type collar generally designated 10. The collar 10 comprises three channel-section, flange-clamping segments 11, 12 and 13 and link elements 14 and 16 for pivotally connecting together segments 11 and 12 and segments 12 and 13, respectively. Connection means, generally designated 17 and 18, are provided at opposite ends of the collar 10 for releasably connecting the collar segments together.

The connection means 17 comprises a pair of axially spaced apart, circumferentially extending brackets 19 and 20 mounted on the segment 11 and having mounted therebetween a fixed locking pin 21. The connection means 18 comprises a pair of axially spaced apart circumferentially extending brackets 22 and 23 mounted on the segment 13. Between the brackets 22 and 23 there is arranged a pivotable locking member 24 which is pivotally mounted on a pivot pin 25 carried by, and extending between, the brackets 22 and 23, and which is provided with a hook-shaped end 26.

A hydraulic emergency release ram 27 is mounted on the collar 10, one end of the ram 27 being pivotally connected to a mounting 28 provided on the segment 13 at its end remote from the brackets 22 and 23 and the other end of the ram 27 being pivotally connected to the locking member 24. In the unextended position (shown in Figures 1 to 3) of the ram 27, the hook-shaped end 26 of the locking member 24 interengages with the fixed locking pin 21 to hold the collar 10 in a closed or locked position in which the segments 11—13 are urged radially inwards. Each of the segments 11—13 have wedging surfaces (not shown) forming part of its upper channel-shaped surface and these wedging surfaces tend to urge the flanges 15 axially together into liquid-tight mating engagement when the segments 11—13 are urged radially inwards.

The brackets 22 and 23 are formed with an aligned pair of upper holes 30 (only one of which can be seen in Figure 3) and an aligned pair of smaller diameter lower holes 31 (only one of which can be seen in Figure 3). When the hook-shaped end 26 of the locking member is interengaged with the locking pin 21, two further holes (not shown) provided in the locking member 24 are respectively aligned with the holes 30 and 31. This enables a release pin 32 to be positioned within the through hole defined by the bracket holes 30 and the associated aligned hole formed in the locking member 24 and a smaller diameter shear pin 33 to be positioned within the through hole defined by the bracket holes 31 and the associated aligned hole formed in the locking member 24.

The release pin 32 is displaceable between an inserted position (shown in Figures 1—3) and a withdrawn position (the end of the pin 32 is shown in dotted lines in Figures 1 and 2) by actuation of an hydraulic cylinder 35. The pin 32 is connected to the hydraulic cylinder 35 via an interlock plate 36 having a keyhole-shaped opening 37 with an enlarged circular portion 38 and a narrower elongate portion 39. The shaft 6, for actuation of the valve element of the ball valve 4, passes through the opening 37 and is provided with a pair of opposed parallel flats 40 on its circular cylindrical surface in the region of the plate 36. In the position of the shaft 6 shown in Figures 1—3 (i.e. when the ball valves 3 and 4 are open), the interlock plate 36 is locked in the position shown in Figures 1 to 3 with the shaft 6 located in the circular portion 38 of the opening 37. When so positioned, the release pin is in its inserted position. On closing the ball valves 3 and 4, the shaft 6 is turned counterclockwise (as viewed in Figure 2) through 90° so that the flats 40 are disposed parallel with the elongate sides of the portion 39 of the opening 37. On subsequent actuation of the hydraulic cylinder 35, the interlock plate 36 is now able to move to the right (as viewed in Figure 2), causing the shaft 6 to be located in the elongate portion 39 of the keyhole-shaped opening 37 and the release pin 32 to be moved out of its inserted position and into its withdrawn position.

When the pin 32 is in its inserted position, the locking member 24 is locked against pivotal movement about pivot pin 25. The release pin 32 is designed so as not to shear even on actuation of the emergency release ram 27 so that the collar 10 cannot be opened if the release pin 32 is in its inserted position.

When the release pin 32 is in its withdrawn position, the shear pin 33 prevents accidental pivotal movement of the locking member 24 about the pivot pin 25. During a normal de-coupling procedure for disconnecting the pipe sections 1 and 2, the shear pin 33 is removed, e.g. manually, to allow pivotal movement of the locking member 24. In an emergency, however, the ram 27 can be actuated with the shear pin 33 still in its inserted position. Actuation of the ram 27 causes the pin 33 to shear and the locking member 24 to pivot about the pivot pin 25 so that the hook-shaped end 26 becomes disengaged from the fixed locking pin 21 enabling the collar 10 to open. It will be appreciated from the foregoing description that the release pin 32 is always in its inserted position when the ball valves 3 and 4 are open and thus the pipe sections 1 and 2 cannot be disconnected when the valves are open with fluid flowing through the pipe sections.

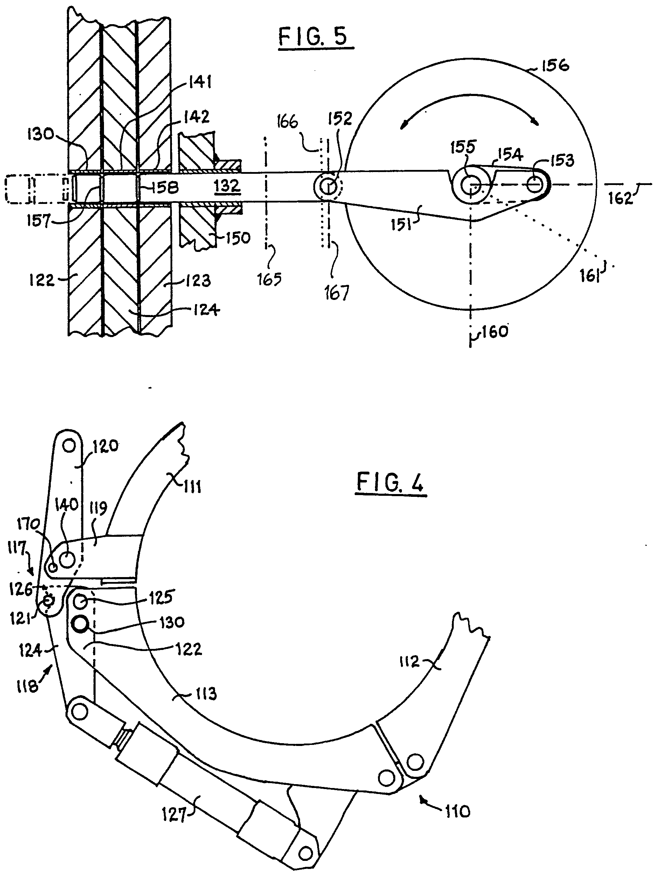

Figures 4 and 5 illustrate another embodiment of a conduit connection system according to the invention employing a collar 110 having three segments 111, 112 and 113 pivotally connected together in a similar manner to that previously described with reference to collar 10 and provided with an emergency release ram 127.

Connection means generally designated 117 and 118, are provided on the segments 111 and 113, respectively. The connection means 117 comprises a pair of brackets 119 mounted on the segment 111 and a member 120 carrying a locking pin 121. The member 120 is pivotally mounted between the brackets 119 for pivotal movement about a pivot pin 140 fixed between, and carried by, the brackets 119. However in normal use the member 120 is retained in a fixed position by means of a shear pin 170 carried by the brackets 119 and passing through a hole (not shown) provided in the member 120. The connection means 118 comprises a pair of brackets 122 and 123 mounted on the segment 113 and a locking member 124 pivotally connected to the ram 127. The locking member 124 is pivotally mounted between the brackets 122 and 123 for pivotal movement about a pivot pin 125 fixed between, and carried by, the brackets 122 and 123. The locking member 124 is also provided with a hole 141 and a hook-shaped end 126 which interengages with the locking pin 121 to lock the collar segments 111 and 113 together and lock the collar 110 in a closed position. The hole 141 is positioned so as to be aligned with a pair of aligned holes 130 and 142, formed in the brackets 122 and 123, respectively, when the locking member 124 is in its locking position shown in Figure 4.

A release pin 132 is movable between first and second positions within the aligned holes 130, 141 and 142 in dependence on the position of fluid flow check valves (not shown) positioned adjacent the flanged ends of pipe sections (not shown) to be connected to or disconnected from each other.

As can be seen in Figure 5, the release pin 132 is mounted for sliding movement in a support 150 and is pivotally connected to a link 151 by means of a pivot pin 152. The link 151 is pivotally connected, by means of a pivot pin 153, to a further link 154 fixed to a shaft 155 of a disc valve actuator 156 for actuating the fluid flow check valves (not shown). The release pin 132 is provided with a pair of annular recesses 157 and 158 which are spaced apart substantially the same distance as the brackets 122 and 123 are spaced from each other and which define weakened regions of the release pin 132.

The valve actuator 156 is movable in a counter-clockwise direction (as viewed in Figure 5) from a valve open or first position, in which the link 154 is aligned along the chain line 160, through a valve closed or second position, in which the link 154 is aligned along the dotted line 161, to an over travel valve closed or third position, in which the link 154 is aligned along the dashed line 162. In Figure 5 the position of the pivot pin 152 is represented, in each of the first, second and third positions of the valve actuator 156, by chain line 165, dotted line 166 and dashed line 167, respectively, and the first and second positions of the release pin 132 for the first and third positions, respectively, of the actuator 156 are represented by chain lines and full lines, respectively.

When the fluid flow check valves (not shown) are open (i.e. the disc valve actuator is in its first position) and the release pin 132 thus occupies its first position, the release pin 132 prevents pivotal movement of the locking member 124 on actuation of the ram 127. As the disc valve actuator 156 is turned in the counterclockwise direction (as viewed in Figure 5), the release pin moves to the right from its first position towards its second position. To ensure that the disc valves are fully closed and sealed, the actuator 156 is turned past the valve closed position and into the final over travel position. In this final over travel position of the disc valve actuator 156, the release pin 132 occupies its second position in which the annular recesses 157 and 158 are positioned at the interfaces between the locking member 124 and the brackets 122 and 123, respectively. When, and only when, the release pin 132 is so positioned in its second position, the pin 132 can be sheared by operation of the ram 127 to pivot the locking member 124 and disengage the latter from the member 120.

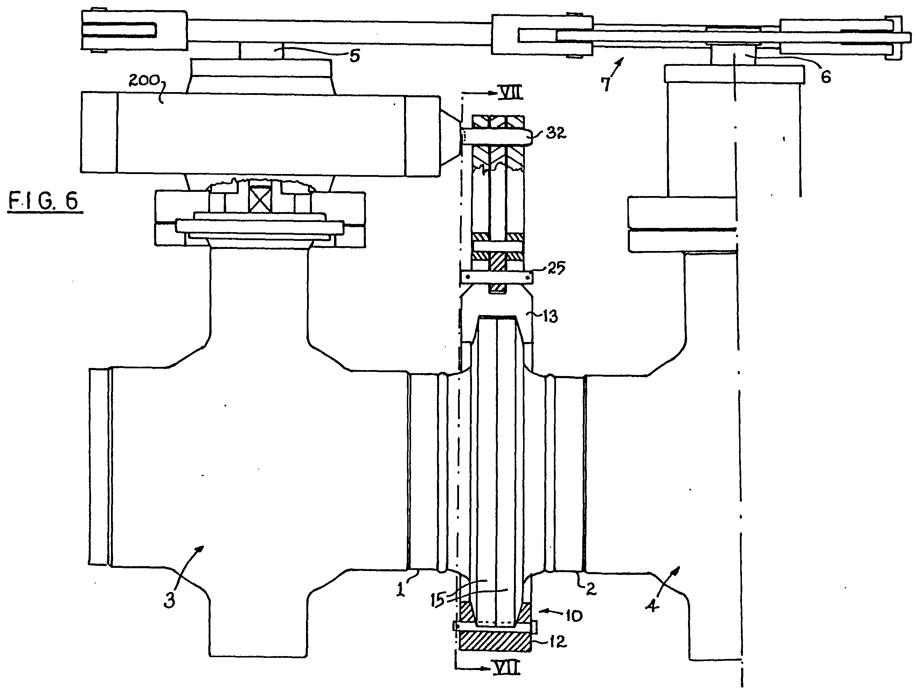

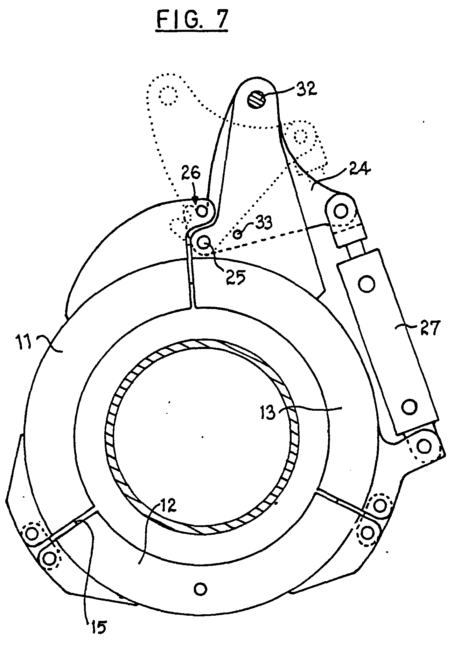

A third embodiment of a conduit connection system according to the invention is shown in Figures 6 and 7. The system shown in Figures 6 and 7 is similar in many respects to that shown in Figures 1 to 3 and, where possible, the same reference numerals have been used to identify similar parts of the two systems.

The main difference in the system shown in Figures 6 and 7 is in the operation of the release pin 32. In particular the release pin 32 is movable between an inserted position (shown in full lines in Figure 6) and a withdrawn position (shown in dotted lines in Figure 6) by actuation of a double-acting semi-rotary actuator 200 which also operates the opening and closing of the ball valves 3 and 4.

In the system shown in Figures 6 and 7, the mating end flanges 15 of pipe sections 1 and 2 can only be decoupled when the ball valves 3 and 4 are closed so that the release pin 32 is in its withdrawn position. Operation of the emergency release ram 27 with the pin 32 in its withdrawn position causes the pin 33 to shear and the locking member 24 to pivot about pivot pin 25 into an open position (shown in dotted lines in Figure 7).

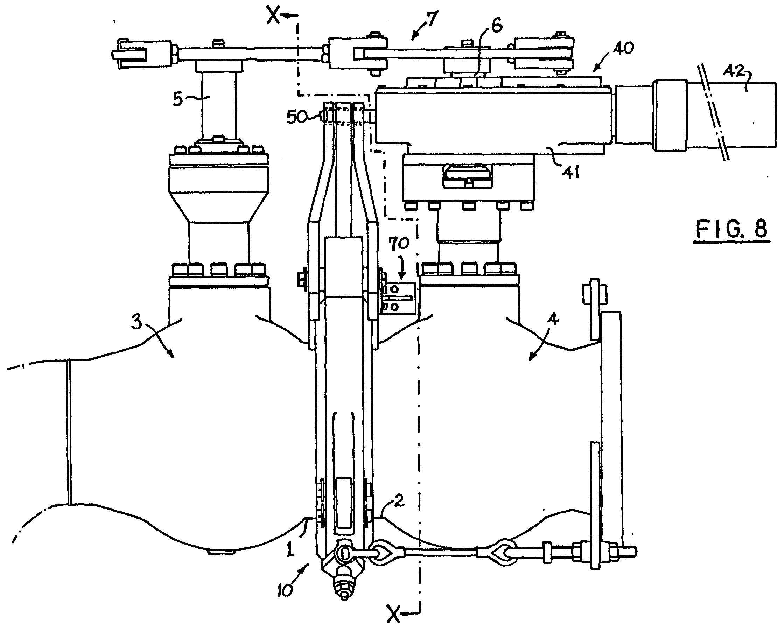

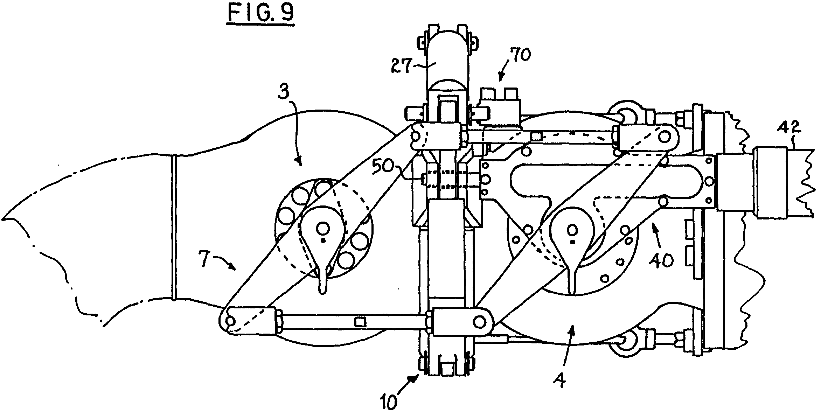

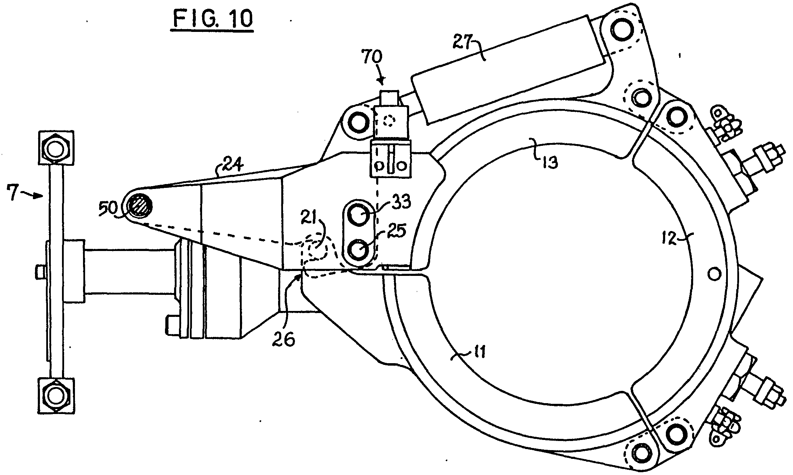

A fourth embodiment of a conduit connection system according to the invention is shown in Figures 8 to 12. The system shown in Figures 8 to 12 is similar in many respects to the other systems described herein and, where possible, the same reference numerals have been used to identify similar system parts.

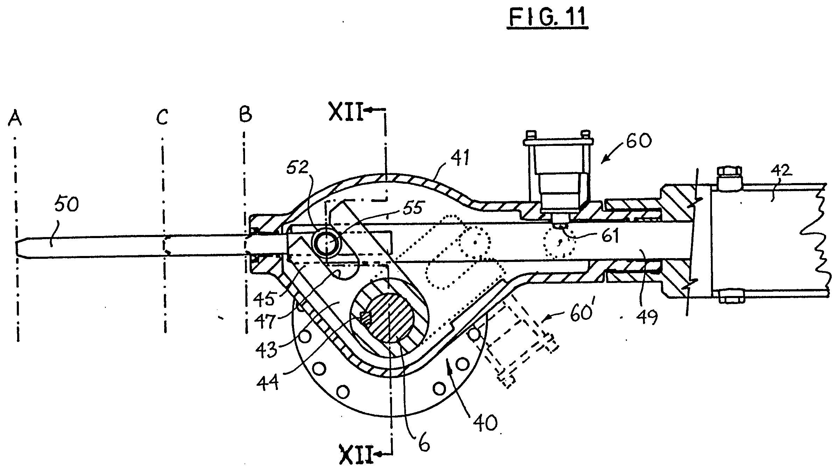

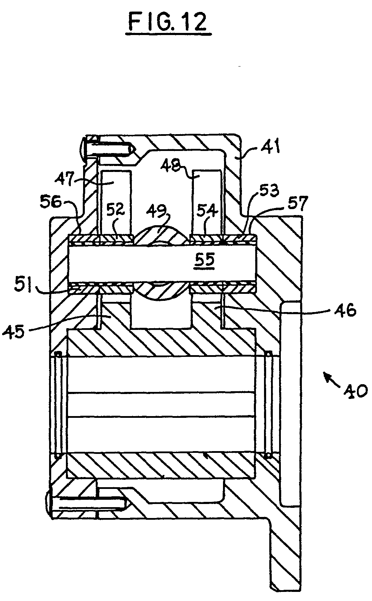

The main difference between the system shown in Figures 8 to 12 and that shown in Figures 6 and 7 is in the construction and operation of the release pin actuating assembly 40 (see in particular Figures 11 and 12). This mechanism 40 comprises a housing 41 through which the ball valve actuating shaft 6 projects and an hydraulic cylinder 42 mounted on the housing 41 with its axis parallel to a line perpendicular to the axis of the shaft 6. An actuator 43 is keyed to the shaft 6 by means of a key 44 and has a pair of spaced apart, parallel arms 45 and 46 extending parallel to a radius of the shaft 6 and provided with open slots 47 and 48, extending radially with respect to the shaft 6. A piston (not shown) is housed within the cylinder 42 and has a piston rod 49 connected thereto which projects into the housing 41. At the end of the piston rod 49 remote from the piston, there is provided a release pin 50, forming an extension of the piston rod 49, and two pairs of rolls 51, 52 and 53, 54 rotatably mounted adjacent the end of the piston rod 49 on a fixed transverse pin 55. The end portion of the piston rod 49 is positioned between the two actuator arms 45 and 46 with the rolls 52 and 54 received in the slots 47 and 48, respectively, and the rolls 51 and 53 received in elongate slots 56 and 57, respectively, formed in the housing 41 and extending parallel to the axis of the cylinder 42.

In use, the free end of the release pin 50 is positionable in a first position A, a second position B or an intermediate third position C, the three positions A, B and C being shown in chain lines in Figure 11. When the ball valves 3, 4 are open, the shaft 6 and the actuator 43 are in the positions shown in full lines in Figure 11 with the release pin 50 in its fully extended, first position A. In position A, the pin 50 is in a collar locking position preventing collar release. When the hydraulic cylinder 42 is actuated to close the ball valves, the piston rod 49 moves to the right in Figure 11, drawing the actuator 43 through a 90° turn, to adopt the position shown in dotted lines in Figure 11. The shaft 6 is also turned in a clockwise direction (as viewed in Figure 11) through 90° closing the valve 4 (and via the linkage 7, the valve 3). During the ½-turn rotation of the actuator 43 the rolls 52 and 54 are guided in the slots 47 and 48, respectively, and the rolls 51 and 53 are guided along the elongate slots 56 and 57, respectively. When the actuator 43 is in the position shown in dotted lines in Figure 11, the release pin 50 is partially retracted in its intermediate or third position C. In position C, the pin 50 still projects sufficiently far to be in a collar-locking position preventing collar release. Opening and closing of the valves 3, 4 is thus accomplished with the interlock pin 50 moving between positions A and C.

However, the actuator 43 is so positioned that the slots 47 and 48 open towards the cylinder 42 allowing further retraction of the piston rod 49. Thus, when the release pin 50 is in position C, the cylinder 42 can be actuated again to retract fully the piston rod 49 so that the release pin 50 is moved into its second position B in which it is completely withdrawn from the collar so that the collar can be opened to disconnect the mating end flanges 15 of the pipe sections 1 and 2.

The conduit connection system shown in Figures 8 to 12 has a number of additional features not shown in the previously described systems. In particular a release pin sensing mechanism 60 (see Figure 11) is mounted at the rear end of the housing 41 and has a sensing element 61 positioned so as to be depressed by roll 54 when the release pin 50 is in its second position B. Actuation of the cylinder 42 is thus ceased when the sensing mechanism 60 senses that the release pin is in its second position B. A further sensing mechanism (shown dotted at 60' in Figure 11) similar to the mechanism 60, can be provided to arrest the cylinder 42 when the pin 50 has reached the intermediate position C. The sensing element of this further sensing mechanism 60' would be depressed by the valve actuating lever 43 when it moves into its position shown in dotted lines in Figure 11. If collar release is required, then the stop provided by the mechanism 60' is overridden and the cylinder 42 reactuated to complete the withdrawal of the pin 50 to the second position B.

A still further sensing mechanism 70 (see Figures 8, 9 and 10) is provided for sensing actuation of the cylinder 27 indicating that the hook-shaped end 26 of the locking member 24 has been disconnected from the locking pin 21.

Although the invention has been described with reference to preferred embodiments employing bandclamp type collars for connecting together flanged ends of pipes, the invention is not intended to be so limited. Indeed the invention is applicable to other types of connectors, e.g. connectors employing pivoting and/or sliding clamping hooks, for connecting pipe flanges together which employ a release member, e.g. a release pin.

## Claims

1. A connection system for securing the ends of conduits (1, 2) having mating end flanges (15) and each provided with a fluid flow check valve (3, 4) movable between open and closed positions, the system comprising flange clamping means (10) including at least one movable element (24) arranged to be positioned in an operative position in which the flange clamping means (10) clamp the mating end flanges (15) of the conduits together, power-operable moving means (27) for application of a predetermined force on said at least one movable element for moving the latter out of its operative position to enable disconnection of the mating end flanges (15) and locking means (32) for locking said at least one movable element (24) in its operative position, the locking means being movable independently of said power-operable moving means (27) into or out of a release position in which movement of said at least one movable element (24) is possible on application thereto of said predetermined force, characterised in that means (35—40) are provided for functionally interlinking movements of at least one of the check valves (3, 4) and the locking means (32) whereby the locking means (32) can only occupy its release position when the at least one check valve (3, 4) is in its closed position, the locking means (32) when out of the release position preventing said at least one movable element (24) being moved out of its operative position on application thereto of the said predetermined force.

2. A connection system according to claim 1, characterised in that the locking means (32) is movable into or out of its release position by power actuating means (200), e.g. an hydraulic actuator.

3. A connection system according to claim 1 or 2, characterised in that said movable element (24) has an aperture in which the locking means (32) is received when the latter is in a locking position.

4. A connection system according to claim 1 or 2, characterised in that the flange clamping means comprises a collar (10) having at least two collar segments (11—13) each provided with means for securing said mating end flanges together when urged radially inwards, pivot means (14, 16) for pivotally interconnecting said collar segments (11—13) between opposite first and second end portions of the collar and first and second connection means (17, 18), one of which comprises or is provided with the said movable element, mounted, respectively, adjacent said first and second end portions of the collar and releasably interengageable with each other for clamping said first and second end portions together so that said collar segments (11—13) are urged radially inwards against the mating end flanges (15).

5. A connection system according to claim 4, characterised in that the first and second connection means (17, 18) each have apertures (30) therein which are aligned with each other when the connection means (17, 18) are interengaged, the said locking means (32), when in a locking position, being inserted through the aligned apertures (30).

6. A connection system according to claim 5, characterised in that the locking means (32) is withdrawn completely from the aligned apertures (30) when moved into its release position.

7. A connection system according to claim 5, characterised in that the locking means is in the form of a pin (132) having at least one weakened region (157, 158), the pin (132) being designed to be sheared, at said at least one weakened region (157, 158), by movement of the first connection means (124) when the locking means is in its release position.

8. A connection system according to any of claims 4 to 7, characterised in that one of the first and second connection means (17, 18) is retained in a position of interengagement with the other connection means by a removable shear pin (33) designed to shear in use if the power-operable means (27) is operated with the shear pin (33) in its operative position and the locking means in its release position.

9. A connection system according to any one of the preceding claims characterised by linkage means (7) for moving the two fluid flow check valves (3, 4) together between their open and closed positions.

10. A connection system according to any one of the preceding claims, characterised in that the said at least one check valve (3, 4) is movable between open and closed positions by a turnable valve actuating shaft (6) and in that the said interlinking means comprises a release mechanism (36—40) of the locking means through which a portion of said valve actuating shaft (6) passes.

11. A connection system according to claim 10, characterised in that the release mechanism includes a slide member (36) connected to the locking means (32) and provided with an opening (37) having an elongate portion (39) and an enlarged end portion (38) and in that the valve actuating shaft (6) projects through said opening (37) and has a control portion having a non-circular cross-section located within the opening (37), the said control portion being located in the said end portion (38) when the locking means is in a first position remote from its release position and being dimensioned to prevent relative movement of the control portion into said elongate portion (39) when the valve actuating shaft (6) is in a valve open position thereby to prevent movement of the locking means (32) into its release position but to allow relative movement of the control portion into said elongate portion (39) when the valve actuating shaft (6) is in a valve closed position thereby to allow movement of the locking means (32) into its release position.

12. A connection system according to any one of claims 1 to 9, characterised in that the locking means (50) is movable into a first position (A) remote from said release position and in intermediate position (C) intermediate said first and release positions (A and B), and in that the said interlinking means comprises a control actuator (43) fixed to a turnable valve actuating shaft (6) for moving said at least one check valve (3, 4) between its open and closed positions and cooperating means (51—57) fixed to the locking means (50) and cooperable with the actuator (40) so that movement of the locking means (50) between its first position (A) and its intermediate position (C) occasioning turning of the valve actuating shaft (6) between a valve open position and a valve closed position, the control actuator (43) allowing movement of the locking means from its intermediate position into its release position (B) without further turning of the valve actuating shaft (6) when the latter is in its valve closed position.

13. A connection system according to any one of claims 1 to 9, characterised in that the said interlinking means comprises linkage means (151—155) connecting the locking means (132) to an actuator (156) for actuating said at least one fluid flow check valve (3, 4), the locking means being movable into or out of its release position to open and close, respectively, the at least one valve on actuation of the actuator (156).

## Patentansprüche

1. Verbindungssystem zum Befestigen der Enden von Rohrleitungen (1, 2), die mit aneinanderstoßenden Endflanschen (15) und jeweils mit einem Strömungsregulierventil (3, 4) versehen sind, das zwischen einer offenen und einer geschlossenen Stellung beweglich ist, umfassend eine Flanschklemmvorrichtung (10), die wenigstens ein verschiebbares Element (24) enthält, das in einer Betriebsposition angeordnet ist, in der die Flanschklemmvorrichtung (10) die aneinanderstoßenden Endflansche (15) der Rohrleitungen miteinander verklemmt, eine kraftgetriebene Bewegungsvorrichtung (27) zum Aufbringen einer vorbestimmten Kraft auf das genannte wenigstens eine bewegliche Element zum Bewegen des letzteren aus seiner Betriebsposition, um eine Trennung der aneinanderstoßenden Endflansche (15) zu erzielen, und eine Arretiervorrichtung (32) zum Arretieren des genannten wenigstens einen beweglichen Elementes (24) in seiner Betriebsposition, wobei die Arretiervorrichtung unabhängig von der genannten kraftgetriebenen Bewegungsvorrichtung (27) in bzw. aus einer Entriegelungsposition beweglich ist, in der eine Bewegung des genannten wenigstens einen beweglichen Elementes (24) nach Aufbringen der genannten vorbestimmten Kraft möglich ist, dadurch gekennzeichnet, daß Vorrichtungen (35—40) zum funktionellen Verketten der Bewegungen von wenigstens einem der Regulierventile (3, 4) und der Arretiervorrichtung (32) vorgesehen sind, so daß die Arretiervorrichtung (32) nur dann ihre Entriegelungsstellung einnehmen kann, wenn sich das wenigstens eine Regulierventil (3, 4) in seiner geschlossenen Position befindet, wobei die Arretiervorrichtung (32), wenn sie sich außerhalb der Entriegelungsposition befindet, verhindert, daß das genannte wenigstens eine bewegliche Element (24) nach Aufbringen der genannten vorbestimmten Kraft aus seiner Betriebsposition bewegt wird.

2. Verbindungssystem nach Anspruch 1, dadurch gekennzeichnet, daß die Arretiervorrichtung (32) durch eine Kraftschaltvorrichtung (200), z.B. durch einen hydraulischen Kraftschalter, in bzw. aus ihrer Entriegelungsstellung beweglich ist.

3. Verbindungssystem nach Anspruch 1 oder 2, dadurch gekennzeichnet, daß das genannte bewegliche Element (24) eine Öffnung aufweist, in der die Arretiervorrichtung (32) aufgenommen wird, wenn sie sich in ihrer Arretierstellung befindet.

4. Verbindungssystem nach Anspruch 1 oder 2, dadurch gekennzeichnet, daß die Flanschklemmvorrichtung eine Manschette (10) mit wenigstens zwei Manschettensegmenten (11—13) aufweist, die jeweils mit einer Vorrichtung zum Befestigen der aneinanderstoßenden Endflansche ausgestattet sind, wenn diese radial nach innen gedrängt werden, eine Zapfenvorrichtung (14, 16) zum schwenkbaren Verbinden der genannten Manschettensegmente (11—13) zwischen gegenüberliegenden ersten und zweiten Endteilen der Manschette und ersten und zweiten Verbindungsvorrichtungen (17, 18), von denen die eine das genannte bewegliche Element enthält bzw. damit ausgestattet ist, das jeweils neben den genannten ersten und zweiten Endteilen der Manschette und eine lösbare Verbindung bildend montiert ist, um die genannten ersten und zweiten Endteile miteinander zu verklemmen, so daß die genannten Manschettensegmente (11—13) radial · nach innen gegen die aneinanderstoßenden Endflansche (15) gedrängt werden.

5. Verbindungssystem nach Anspruch 4, dadurch gekennzeichnet, daß die erste die zweite Verbindungsvorrichtung (17, 18) jeweils Öffnungen (30) aufweist, die aufeinander ausgerichtet sind, wenn die Verbindungsvorrichtungen (17, 18) ineinandergreifn, wobei die genannte Arretiervorrichtung (32), in ihrer Arretierstellung, durch die aufeinander ausgerichteten öffnungen (30) gesteckt werden.

6. Verbindungssystem nach Anspruch 5, dadurch gekennzeichnet, daß die Arretiervorrichtung (32) vollständig von den aufeinander ausgerichteten Öffnungen (30) entfernt ist, wenn sie in ihre Entriegelungsposition bewegt wird.

7. Verbindungssystem nach Anspruch 5, dadurch gekennzeichnet, daß die Arretiervorrichtung die Form eines Stiftes (132) mit wenigstens einer Sollknickstelle (157, 158) aufweist, wobei der Stift (132) so ausgelegt ist, daß er durch die Bewegung der ersten Verbindungsvorrichtung (124), wenn sich die Arretiervorrichtung in ihrer Entriegelungsposition befindet, an der genannten wenigstens einen Sollknickstelle (157, 158) abschert.

8. Verbindungssystem nach einem der Ansprüche 4 bis 7, dadurch gekennzeichnet, daß eine der ersten und zweiten Verbindungsvorrichtungen (17, 18) von einem entfernbaren Abscherstift (33) in einer Eingriffsposition mit der anderen Verbindungsvorrichtung gehalten wird, wobei der Abscherstift (33) so ausgelegt ist, daß er bei Verwendung abschert, wenn die kraftgetriebene Vorrichtung (27) betrieben wird, während sich der Abscherstift (33) in seiner Betriebsposition und die Arretiervorrichtung in ihrer Entriegelungsposition befindet.

9. Verbindungssystem nach einem der vorhergehenden Ansprüche, gekennzeichnet durch eine Gestängevorrichtung (7) zum gemeinsamen Bewegen der beiden Strömungsregulierventile (3, 4) zwischen ihren offenen und ihren geschlossenen Positionen.

10. Verbindungssystem nach einem der vorhergehenden Ansprüche, dadurch gekennzeichnet, daß das genannte wenigstens eine Regulierventil (3, 4) von einer drehbaren Ventilbetätigungswelle (6) zwischen der offenen und der geschlossenen Position beweglich ist und dadurch, daß die genannte Verkettungsvorrichtung einen Entriegelungsmechanismus (36—40) der Arretiervorrichtung umfaßt, durch den ein Teil der genannten Ventilbetätigungswelle (6) verläuft.

11. Verbindungssystem nach Anspruch 10, dadurch gekennzeichnet, daß der Entriegelungsmechanismus ein Schieberelement (36) beinhaltet, das mit der Arretiervorrichtung (32) verbunden und mit einer Öffnung (37) versehen ist, die einen länglichen Teil (39) und einen vergrößerten Endteil (38) aufweist, und dadurch, daß die Ventilbetätigungswelle (6) durch die genannte Öffnung (37) verläuft und ein Steuerteil aufweist, das einen nicht-runden Querschnitt innerhalb der Öffnung (37) aufweist, wobei sich das genannte Steuerteil in dem genannten Endteil (38) befindet, wenn sich die Arretiervorrichtung in einer ersten Position von ihrer Entriegelungsposition entfernt befindet, und so dimensioniert ist, daß es eine relative Bewegung des Steuerteils in das genannte längliche Teil (39) verhindert, wenn sich die Ventilbetätigungswelle (6) in einer Ventilöffnungsposition befindet, um dadurch eine Bewegung der Arretiervorrichtung (32) in ihre Entriegelungsposition zu verhindern und gleichzeitig eine relative Bewegung des Steuerteils in das genannte längliche Teil (39) zuzulassen, wenn sich die Ventilbetätigungswelle (6) in einer geschlossenen Ventilposition befindet, um dadurch eine Bewegung der Arretiervorrichtung (32) in ihre Entriegelungsposition zuzulassen.

12. Verbindungssystem nach einem der Ansprüche 1 bis 9, dadurch gekennzeichnet, daß die Arretiervorrichtung (50) in eine von der genannten Entriegelungsposition entfernte erste Position (A) und eine Zwischenposition (C) zwischen der genannten ersten und der Entriegelungsposition (A und B) beweglich ist, und dadurch, daß die genannte Verkettungsvorrichtung einen Steuerschalter (43) umfaßt, der an einer drehbaren Ventilbetätigungswelle (6) zum Bewegen des genannten wenigstens einen Regulierventils (3, 4) zwischen seiner offenen und seiner geschlossenen Position befestigt ist, und Zusammenwirkvorrichtungen (51—57), die an der Arretiervorrichtung (50) befestigt sind und mit dem Schalter (40) zusammenwirken, so daß die Bewegung der Arretiervorrichtung zwischen ihrer ersten Position (A) und ihrer Zwischenposition (C) das Drehen der Ventilbetätigungswelle (6) zwischen einer geöffneten Ventilposition und einer geschlossenen Ventilposition ermöglicht, wobei der Steuerschalter (43) eine Bewegung der Arretiervorrichtung von ihrer Zwischenposition in ihre Entriegelungsposition (B) ohne weiteres Drehen der Ventilbetätigungswelle (6) zuläßt, wenn sich die Letztere in ihrer geschlossenen Ventilposition befindet.

13. Verbindungssystem nach einem der Ansprüche 1 bis 9, dadurch gekennzeichnet, daß die genannte Verkettungsvorrichtung eine Gestängevorrichtung (151—155) umfaßt, die die Arretiervorrichtung (132) mit einem Schalter (156) verbindet, der das genannte wenigstens eine Strömungsregulierventil (3, 4) betätigt, wobei die Arretiervorrichtung in ihre bzw. aus ihrer Entriegelungsposition beweglich ist, um das wenigstens eine Ventil nach Betätigung des Schalters (156) zu öffnen bzw. zu schließen.

**Revendications**

1. Un système de raccord pour fixer les extrémités de conduits (1, 2) ayant des brides d'extrémité d'accouplement (15) munies chacune d'une soupape de retenue d'écoulement de fluide (3, 4) mobile entre des positions d'ouverture et de fermeture, le système comprenant un moyen de serrage à collier (10) comportant au moins un élément mobile (24) destiné à être placé dans une position de fonctionnement dans laquelle le moyen de serrage à collier (10) verrouille ensemble les brides d'extrémité d'accouplement (15) des conduits, un moyen de déplacement pouvant être actionné par énergie motrice (27) pour l'application d'une force prédéterminée sur au moins un élément mobile pour déplacer ce dernier hors de sa position de fonctionnement pour permettre la mise hors de contact des brides d'extrémité d'accouplement (15) et du moyen de verrouillage (32) pour verrouiller au moins un élément mobile (24) dans sa position de fonctionnement, le moyen de verrouillage étant susceptible de se déplacer indépendamment dudit moyen de déplacement pouvant être actionné par énergie motrice (27) pour venir dans ou hors d'une position de dégagement dans laquelle le mouvement d'au moins un élément mobile (24) est possible en appliquant sur lui ladite force prédéterminée, caractérisé en ce que des moyens (35—40) sont prévus pour relier fonctionnellement les mouvements d'au moins une soupape de retenue (3, 4) et du moyen de verrouillage (32), grâce à quoi le moyen de verrouillage (32) peut uniquement occuper sa position de dégagement lorsque au moins une soupape de retenue (3, 4) est dans sa position fermée, le moyen de verrouillage (32) lorsqu'il est hors de sa position de dégagement empêchant au moins un élément mobile (24) d'être déplacé hors de sa position de fonctionnement en appliquant sur lui la dite force prédéterminée.

2. Un système de raccord selon la revendication 1, caractérisé en ce que le moyen de verrouillage (32) peut se déplacer pour venir dans ou hors de sa position de dégagement par l'intermédiaire d'un moyen d'actionnement à énergie motrice (200) par exemple un dispositif d'actionnement hydraulique.

3. Un système de raccord selon la revendication 1 ou 2, caractérisé en ce que ledit élément mobile (24) comporte une ouverture dans laquelle est reçu le moyen de verrouillage (32) lorsque ce dernier est dans une position de verrouillage.

4. Un système de raccord selon la revendication 1 ou 2, caractérisé en ce que le moyen de serrage à collier comporte un collier (10) ayant au moins deux segments de collier (11—13) munis chacun de moyens pour fixer ensemble lesdites brides d'extrémité d'accouplement lorsqu'elles sont poussées radialement vers l'intérieur, de moyens de pivotement (14, 16) pour assurer l'interconnexion par pivotement desdits segments de collier (11, 13) entre les première et seconde parties d'extrémité opposées du collier et les premier et second moyens de raccord (17, 18), dont l'un deux comporte ou est muni dudit élément mobile, respectivement monté près desdites première et seconde parties d'extrémité du collier et pouvant être accouplés de façon dégageable pour le serrage desdites première et seconde parties d'extrémité de telle sorte que lesdits segments de collier (11—13) soient poussés radialement vers l'intérieur contre les brides d'extrémité d'accouplement (15).

5. Un système de raccord selon la revendication 4, caractérisé en ce que les premier et second moyens de raccord (17, 18) ont chacun des ouvertures (30) qui sont alignées lorsque les moyens de raccord (17, 18) sont accouplés, ledit moyen de verrouillage (32), lorsqu'il est dans une position de verrouillage, étant inséré dans lesdites ouvertures alignées (30).

6. Un système de raccord selon la revendication 5, caractérisé en ce que le moyen de verrouillage (32) est complètement retiré des ouvertures alignées (30) lorsqu'il est déplacé dans sa position de dégagement.

7. Un système de raccord selon la revendication 5, caractérisé en ce que le moyen de verrouillage se présente sous la forme d'un axe (132) ayant au moins une zone amincie (157, 158), l'axe (132) étant destiné à être cisaillé au niveau d'au moins une zone amincie (157, 158), par le déplacement du premier moyen de raccord (124) lorsque le moyen de verrouillage est dans sa position de dégagement.

8. Un système de raccord selon l'une quelconque des revendications 4 à 7, caractérisé en ce que l'un des premier et second moyens de raccord (17, 18) est maintenu dans une position d'interconnexion avec l'autre moyen de raccord par l'intermédiaire d'une broche de cisaillement pouvant être enlevée (33) destinée à cisailler, à l'usage si le moyen pouvant être actionné par énergie motrice (27) est actionné avec la broche de cisaillement (33) dans sa position de fonctionnement et le moyen de verrouillage dans sa position de dégagement.

9. Un système de raccord selon l'une quelconque des revendications précédentes, caractérisé par un moyen de liaison (7) pour déplacer ensemble les deux soupapes de retenue d'écoulement du fluide (3, 4) entre leurs positions d'ouverture et de fermeture.

10. Un système de raccord selon l'une quelconque des revendications précédentes, caractérisé en ce que au moins l'une desdites soupapes de retenue (3, 4) peut se déplacer entre des positions d'ouverture et de fermeture par l'intermédiaire d'un arbre d'actionnement de(s) soupape(s) pouvant tourné et en ce que ledit moyen de liaison comporte un mécanisme de dégagement (36—40) du moyen de verrouillage à travers lequel passe une partie dudit arbre d'actionnement des soupapes (6).

11. Un système de raccord selon la revendication 10, caractérisé en ce que le mécanisme de dégagement comporte un élément coulissant (36) relié au moyen de verrouillage (32) et muni d'une ouverture (37) ayant une partie allongée (39) et une partie d'extrémité élargie (38) et en ce que l'arbre d'actionnement de(s) soupape(s) (6) fait saillie à travers ladite ouverture (37) et présente une partie de commande ayant une section transversale circulaire montée dans l'ouverture (37), ladite partie de commande étant placée dans ladite partie d'extrémité (38) lorsque le moyen de verrouillage est dans une première position, éloignée de sa position de dégagement, et dont les dimensions empêchent le mouvement relatif de la partie de commande, dans ladite partie allongée (39), lorsque l'arbre d'actionnement de(s) soupape(s) (6) est dans une position d'ouverture de(s) soupape(s) afin d'empêcher le mouvement du moyen de verrouillage (32) dans sa position de dégagement mais de permettre le déplacement relatif de la partie de commande, dans ladite partie allongée (39), lorsque l'arbre d'actionnement de(s) soupape(s) (6) est dans une position de fermeture de soupape afin de permettre le déplacement du moyen de verrouillage (32) dans sa position de dégagement.

12. Un système de raccord selon l'une quelconque des revendications 1 à 9, caractérisé en ce que le moyen de verrouillage (50) peut se déplacer dans une première position, (A) éloignée de ladite position de dégagement, et une position intermédiaire (C), entre ladite première position et la position de dégagement (A et B), et en ce ledit moyen de liaison comporte un dispositif de commande (43), fixé à l'arbre d'actionnement de(s) soupape(s) pouvant tourné (6), pour déplacer au moins l'une desdites soupapes de retenue (3, 4) entre leurs positions d'ouverture et de fermeture et les moyens associés (51—57), fixés au moyen de verrouillage (50) et susceptibles de coopérer avec le dispositif d'actionnement (40), de telle sorte que le déplacement du moyen de verrouillage (50), entre sa première position (A) et sa position intermédiaire (C), assure la rotation de l'arbre d'actionnement de(s) soupape(s) (6) entre une position d'ouverture de(s) soupape (s) et une position de fermeture de(s) soupape(s), le dispositif de commande (43) permettant le déplacement du moyen de verrouillage, de sa position intermédiaire à sa position de dégagement (B), sans faire tourner davantage l'arbre d'actionnement de(s) soupape(s) (6) lorsque ce dernier est dans sa position de fermeture de(s) soupape(s).

13. Un système de raccord selon l'une quelconque des revendications 1 à 9, caractérisé en ce que ledit moyen de liaison comporte un mécanisme articulé (151—155) reliant le moyen de verrouillage (132) à un dispositif d'actionnement (156) pour actionner au moins une soupape d'écoulement de fluide (3, 4), le moyen de verrouillage pouvant se déplacer dans ou hors de sa position de dégagement pour ouvrir et fermer respectivement au moins une soupape sous l'effet du dispositif d'actionnement (156).

FIG.1

EP 0 175 469 B1

FIG. 2

## FIG.3

EP 0 175 469 B1

FIG. 5

141
142
130
166
152
156
155
154
153
158
132
151
162
157
150
165
167
161
122
123
124
160

FIG. 4

120
111
170
140
119
117
126
125
121
130
124
122
118
113
112
127
110

4

F.I.G. 6

# FIG. 7

FIG. 8

EP 0 175 469 B1

FIG.9

FIG. 10

FIG. 11

# FIG. 12